(19) Europäisches Patentamt
European Patent Office
Office européen des brevets

(11) **EP 3 334 076 B1**

(12) **EUROPEAN PATENT SPECIFICATION**

(45) Date of publication and mention of the grant of the patent:
**31.07.2024 Bulletin 2024/31**

(21) Application number: **16306649.1**

(22) Date of filing: **09.12.2016**

(51) International Patent Classification (IPC):
**H04L 1/00** (2006.01)    **H04L 25/02** (2006.01)
**H04L 25/03** (2006.01)    **H04L 27/26** (2006.01)

(52) Cooperative Patent Classification (CPC):
**H04L 1/005; H04L 1/0071; H04L 25/0228;**
**H04L 25/03159; H04L 27/2613**

(54) **METHODS AND DEVICES FOR PILOT AIDED INTERLEAVING-BASED MULTIPLE ACCESS**

VERFAHREN UND VORRICHTUNGEN FÜR PILOTGESTÜTZTEN VERSCHACHTELUNGSBASIERTEN MEHRFACHZUGRIFF

PROCÉDÉS ET DISPOSITIFS D'ACCÈS MULTIPLE ASSISTÉ PAR PILOTE AVEC ENCARTAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.06.2018 Bulletin 2018/24**

(73) Proprietor: **Alcatel Lucent**
**91620 Nozay (FR)**

(72) Inventor: **YEJIAN, Chen**
**70435 Stuttgart (DE)**

(74) Representative: **Script IP Limited**
**Suite J, Anchor House**
**School Close**
**Chandlers Ford**
**Eastleigh, Hampshire SO53 4DY (GB)**

(56) References cited:
- **CHEN YEJIAN ET AL: "Trellis-based channel estimation for asynchronous IDMA with superimposed pilots", 2014 IEEE/CIC INTERNATIONAL CONFERENCE ON COMMUNICATIONS IN CHINA (ICCC), IEEE, 13 October 2014 (2014-10-13), pages 539 - 543, XP032721830, DOI: 10.1109/ICCCHINA.2014.7008336**
- **CHEN YEJIAN: "Two-Dimensional Pilot Design for Non-Orthogonal Multiple Access in Multicarrier System", 2016 IEEE GLOBECOM WORKSHOPS (GC WKSHPS), IEEE, 4 December 2016 (2016-12-04), pages 1 - 6, XP033063254, DOI: 10.1109/GLOCOMW.2016.7849070**
- **ZHU XUDONG ET AL: "Graph Coloring Based Pilot Allocation to Mitigate Pilot Contamination for Multi-Cell Massive MIMO Systems", IEEE COMMUNICATIONS LETTERS, IEEE SERVICE CENTER, PISCATAWAY, NJ, US, vol. 19, no. 10, 1 October 2015 (2015-10-01), pages 1842 - 1845, XP011586505, ISSN: 1089-7798, [retrieved on 20151008], DOI: 10.1109/LCOMM.2015.2471304**

**Description**

**Field of the invention**

**Background**

Multiple Access (MA) schemes support multiuser detection to achieve flexible and robust communication in wireless telecommunication networks.

Advanced MA schemes such as Interleave-Division Multiple Access (IDMA), Non-Orthogonal Multiple Access (NOMA), or Sparse Code Multiple Access (SCMA) provide Physical Layer (PHY) solutions for wireless communications.

EP 2 930 872 A1 discloses concepts related to reception and transmission of user data in wireless telecommunication networks by an exemplary IDMA system.

Furthermore, the papers" Trellis-based channel estimation for asynchronous IDMA with superimposed pilots" by CHEN YEJIAN et al, 2014 IEEE/CIC International conference on communications in china, IEEE, 13 October 2014, pages 539-543," Two-dimensional Pilot Design for Non-Orthogonal Multiple Access in Multicarrier System" by CHEN YEJIAN, 2016 IEEE GLOBECOM WORKSHOPS, IEEE, 4 December 2016, pages 1-6, and "Graph Coloring Based Pilot Allocation to Mitigate Pilot Contamination for Multi-Cell Massive MIMO Systems" by ZHU XUDONG et al, IEEE Communications letters, IEEE service center, vol. 19, no. 10, 1 October 2015, pages 1842-1845 disclose related concepts.

Interleaving is a key element for transmission and detection of user signals, especially for small data packet communications. IDMA, for example, is capable of detecting and decoding multiple user signals with a single receive antenna. Interleavers are used in IDMA as only means for doing a separation between the different users. Each user uses a different interleaver. A receiver uses the knowledge of the interleaver used by each user to separate the data send by each user. Information about the different interleavers is available as interleaving mapping information. A dedicated control region is allocated in IDMA to carry a control signal which includes interleaving mapping information. However, additional time-frequency resource is required for such control signal. Furthermore, for sporadic small data packet transmission, the additional time-frequency resource required by such control signaling is comparably large with respect to the time-frequency resource for user data in such small packet communications.

**Summary**

It is therefore desirable to address these deficiencies for improved distribution of interleaving mapping information.

This summary is provided to introduce concepts related to reception and transmission of data and interleaving mapping information in a wireless telecommunication network and, particularly but not exclusively, to deploy a superimposed pilot signal as a medium to carry interleaving mapping information.

With respect to addressing these deficiencies, a method of sending data in pilot aided interleaving-based multiple access, comprises constructing a data signal from data interleaved according to an interleaving mechanism, constructing a basic element of a pilot signal based on a row of an orthogonal codebook matrix of an orthogonal basis consisting of code words that are mathematically orthogonal, e.g. a Walsh-Hadamard matrix, wherein each row of the orthogonal codebook **matrix corresponds** to an interleaving **mechanism** and wherein the one-to-one mapping between the rows of the orthogonal codebook matrix and the interleaving mechanism is stored in a table, superimposing the basic element and the data signal to form a superimposed signal, and sending the superimposed signal. This way a sender can inform a receiver about how to interleave the data in the data signal in the same order as the sender with the result that both sender and receiver can suitably reorder the data signal. An additional allocation of time-frequency resources for transmitting the interleaving mapping information is not required, because the interleaving **mechanism** is transmitted in the20 superimposed signal. This is advantageous if resource for control information is very limited, as in small packet communications. This enables an alternative solution in particular for sporadic small data packet transmission.

Advantageously the basic element is constructed to have a first time-frequency allocation, wherein the data signal is constructed to have a second time-frequency allocation, wherein the first time frequency allocation is within the second time-frequency allocation, and wherein the method comprises duplicating the basic element at least once to form a duplicated basic element or constructing a duplicated basic element, the duplicated basic element having a third time-frequency allocation within the second time-frequency allocation, wherein the third time-frequency allocation is not overlapping the first time-frequency allocation, and superimposing the at least one duplicated basic element and the data signal. This provides redundancy with respect to the transmission of the interleaving Mechanism . The receiver can therefore detect the interleaving **mechanism,** even if the basic element in the superimposed signal is received with an error.

Advantageously, the method comprises duplicating the basic element to a plurality of duplicated basic elements or constructing a plurality of duplicated basic elements, the plurality of duplicated basic elements having a plurality of neighbouring non-overlapping time-frequency allocations within the second time-frequency allocation, and superimposing the data signal with the plurality of duplicated basic elements. If the data signal requires a plurality of time-frequency allocation than the basic element, one or more copies of the basic element for transmitting the interleaving **mechanism** can be added. This improves the reliability without additional time-frequency allocation.

Preferably, the method comprises constructing at least two identical basic elements of the pilot signal, superimposing at least two data signals each with one of the at least two identical basic elements, wherein at least two radio cells of a plurality of radio cells in a pilot aided interleaving-based multiple access telecommunication network are selected for superimposing the at least two data signals depending on their distance to each other. A superimposed signal in a radio cell may suffer from interference by another superimposed signal originating from another radio cell. This may cause an error in the reception of data because the basic element of the pilot signal identifies a user, and hence cause performance degradation. The re-use of the same basic element in different radio cells however is desirable, because this way more channels are available in an array of radio cells using the same orthogonal codebook matrix. The disturbance by the re-use of a particular basic element is depending on the signal strength and hence on the distance between individual radio cells. The distance is therefore a good criterion for selecting radio cells that re-use the same basic element in their respective pilot signals.

Advantageously, the method comprises selecting pilot aided interleaving-based multiple access radio cells for superimposing data signals with identical basic elements that are located at distance from each other, wherein the distance exceeds a threshold. The threshold is a preferred indication for the distance between the radio cells that has to be exceeded to avoid the interference between superimposed signals.

Advantageously the threshold depends on information about a size of at least one pilot aided interleaving-based multiple access radio cell. Radio cells are selected to send the superimposed signals with a signal strength corresponding to the size of the individual cell. A preferred threshold distance therefore depends on the size of the radio cells.

Preferably the threshold depends on information about a multiple of a length characteristic for the size of the one or more radio cells. The length characteristic is an indication of the radio cell that is typically known by design. This allows selecting the threshold and hence the radio cells that can re-use the same basic element.

Preferably the data signal is encoded, e.g. with a turbo encoder, interleaved and modulated, e.g. using quadrature amplitude modulation QAM, e.g. M-QAM. The basic element of the pilot signal is preferably modulated, e.g. using binary phase-shift keying BPSK only. This reduces processing resources required before superimposing the basic element with the data signal. Furthermore, a non-interleaved basic element can be detected without any additional pilot signals for transmitting interleaving **mechanisms**. A predetermined setup where the interleaving mapping information is known for the basic element is also not required. This increases the flexibility.

Preferably the average power per pilot symbol is less than the average power per data symbol. In the most cases, the pilot symbol will reserve only 10% to 30% of total transmit power, which is lower than that of the data symbol. This way, despite the energy used for transmitting the basic element, sufficient energy is available for transmitting the data signal in the superimposed signal for reliable detectability and robustness against disturbance.

With respect to addressing the aforementioned deficiencies, a method of receiving data in pilot aided interleaving-based multiple access network, comprises receiving the superimposed signal, formed by superimposing the basic element of the pilot signal and the data signal, the data signal being constructed from data interleaved according to an interleaving mechanism, and the basic element of the pilot signal being constructed **based** on the row of the orthogonal codebook matrix of the orthogonal basis consisting of code words that are mathematically orthogonal, e.g. the Walsh-Hadamard matrix, wherein each row of the orthogonal codebook matrix **corresponds to an** interleaving **mechanism and wherein the one-to-one mapping between the rows of the orthogonal codebook matrix and the interleaving mechanism is stored in a table**, decomposing the superimposed signal to form the basic element and the data signal, detecting the interleaving mechanism from the basic element, and decoding the data signal based on the detected interleaving mechanism. Preferably, the same orthogonal codebook matrix is known to the sender and the receiver. As the code words in the orthogonal codebook matrix are orthogonal, and because it is known that a valid basic element of the pilot signal depends on one row of the orthogonal codebook matrix, the receiver can match a received basic element to a corresponding row of the orthogonal codebook matrix. If an error occurs in transmission of the basic element, the orthogonality of the code words in the orthogonal codebook matrix provides good error correction capabilities. This increases the availability of the interleaving **mechanism** at the receiver, even when the interleaving **mechanism** is transmitted in the superimposed signal. An additional allocation of time-frequency resources for transmitting the interleaving **mechanism** is not required, because the interleaving **mechanism** transmitted in the superimposed signal is reliably detectable at the receiver.

The data signal is decoded depending on the interleaving mechanism. The superimposed signal contains the interleaving **mechanism** for decoding the data signal in the same superimpose signal. This way, the data signal can immediately be reordered when the superimposed signal is received. Provided that all data blocks required for decoding a sequence of the data signal are transmitted in one superimposed signal, each data signal can immediately be reordered and decoded when the superimposed signal is received.

With respect to addressing the aforementioned deficiencies, a sender is provided, comprising a processor and storage comprising instructions executable by the processor, wherein the processor is adapted to execute the instructions to construct the data signal from data interleaved according to an interleaving mechanism, Construct the basic element of the pilot signal based on the row of the orthogonal codebook matrix of the orthogonal basis consisting of code words that are mathematically orthogonal, e.g. the Walsh-Hadamard matrix, wherein each row of the orthogonal codebook matrix **corresponds** to an interleaving mechanism and wherein the one-to-one mapping between the rows of the orthogonal codebook matrix and the interleaving mechanism is stored in a table, superimpose the basic element and the data signal to form the superimposed signal, and wherein the sender is adapted to send the superimposed signal in a pilot aided interleaving-based multiple access network.

Furthermore a receiver for a pilot interleaving-based multiple access network is provided comprising another processor and storage comprising instructions executable by the other processor, wherein the receiver is adapted to receive the superimposed signal, formed by superimposing the basic element of the pilot signal and the data signal, the data signal being constructed from data interleaved according to an interleaving mechanism, and the basic element of the pilot signal being constructed based on the row of the orthogonal codebook matrix of the orthogonal basis consisting of code words that are mathematically orthogonal, e.g. the Walsh-Hadamard matrix, wherein each row of the orthogonal codebook matrix **corresponds** to an interleaving mechanism and wherein the one-to-one mapping between the rows of the orthogonal codebook matrix and the interleaving mechanism is stored in a table, wherein the processor is adapted to execute the instructions to decompose the superimposed signal to form the basic element and the data signal, and detect the interleaving **mechanism** from the basic element and decode the data signal **based** on the detected interleaving mechanism.

Further developments of the invention can be gathered from the dependent claims and the following description.

## Brief description of the figures

Figure 1 schematically depicts parts of a time-frequency allocation of a radio resource,

Figure 2 schematically depicts parts of an exemplary Walsh-Hadamard matrix and a basic element for a pilot signal,

Figure 3 schematically depicts parts of a time-frequency allocation of a radio resource for two user of the radio resource,

Figure 4 schematically depicts parts of a method of sending data,

Figure 5 schematically depicts parts of a method of receiving data,

Figure 6 schematically depicts parts of a radio access network,

Fig. 7 schematically depicts an example for a pilot aided interleaving-based multiple access telecommunication network,

Fig. 8 schematically depicts another example for a pilot aided interleaving-based multiple access telecommunication network,

Fig. 9 schematically depicts parts of a MIMO system.

## Description of the embodiments

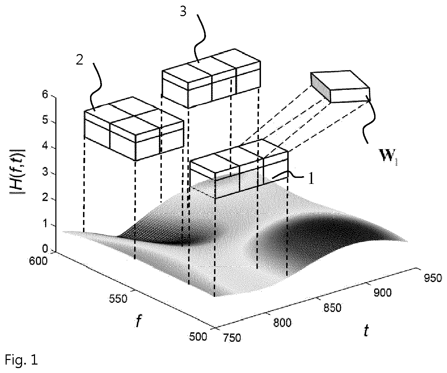

Fig. 1 schematically depicts parts of a time-frequency allocation $|H (f, t)|$ of a radio resource. In the following an example is described for superimposed pilot aided interleaving-based multiple access, e.g. pilot aided Interleaving-Division Multiple Access (IDMA).

Channel estimation in such IDMA system within an asynchronous environment may exploit superimposed pilots as additional layers to the signal layers, by allocating a marginal fraction of total transmission power. The superimposed pilots are cyclically repeated user-specific spreading sequences, a priori known by corresponding receiver. The superimposed pilots can provide an initial channel estimate by realizing the estimation on the single-user basis with respect to the code-division orthogonality. An example for this is describing in 5GNOW Deliverable 3_3 final.

In Fig. 1 details of the time-frequency allocation |H (f, t)| of a first superimposed signal 1, a second superimposed signal 2 and a third superimposed signal 3 are depicted. The first superimposed signal 1 corresponds for example to a first user. The second superimposed signal 2 corresponds for example to a second user. The third superimposed signal 3 corresponds for example to a third user. A first data signal and at least one first basic element W1 of a first pilot signal are a superimposed to form the first superimposed signal 1. For the second superimposed signal 2, and the third superimposed signal 3, the same applies, but different basic elements are used.

In Fig. 1, the basic idea is illustrated to clarify the fundamentals. This example adopts a 3GPP urban micro channel model e.g. for users with 30km/h mobility. The superimposed pilots and data of the user will be transmitted over the same time-frequency allocation. The basic element of superimposed pilots of any user is in the example a 16x24 time-frequency raster. Any basic element is in the example obtained from an orthogonal set of basic elements, which realizes the channel estimation within that time-frequency raster. Preferably in time-frequency allocations of basic elements of a particular user are repeated for several times, as a superposition of the data signal of that particular user. In Fig. 1, the data signal size of user 1, 2 and 3 is between 1000 to 1500 symbols.

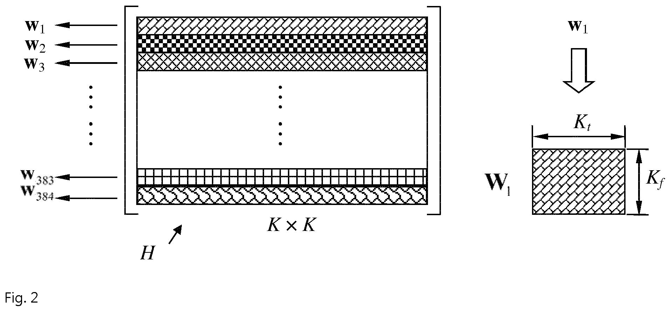

The first basic element W1 of the first pilot signal is constructed in the example by a Walsh-Hadamard code in a matrix H. This Walsh-Hadamard matrix H is depicted schematically in Fig. 2 in an example of a K × K matrix with a plurality of Walsh-Hadamard codes w1, ..., wK.

The Walsh-Hadamard matrix H is known by a sender and a receiver. In the described example, K is 384, i.e. there are 384 Walsh-Hadamard codes w1, ..., w384 available. The basic idea is to establish a one-to-one mapping rule between the interleaving mechanism and Walsh-Hadamard code index. The index identifies a row of the Walsh-Hadamard matrix H. For example, Walsh-Hadamard code 1 corresponds to row 1 and to an interleaver 1. Walsh-Hadamard code 2 corresponds to row 2 and an interleaver 2, etc.. This correspondence is also known by both sender and receiver.

To provide different basic elements for each user in a multi-user embodiment, the following may be used.

In a non-orthogonal multiple access, NOMA, system 4 basic elements are used for enabling the system to operate with 2 to 4 users. This applies to NOMA with interleave division multiple-access IDMA, successive interference canceller/semi-orthogonal multiple-access, SIC/SOMA, or sparse code multiple-access SCMA.

Considering in an example a 4x4 Walsh Hadamard matrix W1 as the first basic element, further basic elements may be obtained by clockwise rotation of matrix W1 with respect to the center of the matrix to yield matrices W2 to W4:

```
W1:

 1   1   1   1
 1  -1   1  -1
 1   1  -1  -1
 1  -1  -1   1


W2:

 1   1   1   1
-1   1  -1   1
-1  -1   1   1
 1  -1  -1   1


W3:

 1  -1  -1   1
-1  -1   1   1
-1   1  -1   1
 1   1   1   1
```

```
W4:
 1  -1  -1   1
 1   1  -1  -1
 1  -1   1  -1
 1   1   1   1
```

If more users need to be accommodated, e.g. supporting massive multiple-input and multiple-output, MIMO, a more generalized scheme is used. In the example of Fig. 2, a common ordering rule for all 384 vectors represented by individual rows of the Walsh-Hadamard matrix H is used to map any vector wn to a corresponding basic element Wn, known by the sender and the receiver. For the first basic element W1 this is depicted schematically in Fig. 2 as well. The resulting time-frequency allocation for the first basic element W1 is characterized by parameters Kt for time and Kf for frequency domain. In the example the basic elements of the pilot signal are 16x24=384 binary phase-shift keying, BPSK, symbols adopted from a 384x384 Walsh-Hadamard matrix and the parameters are Kf = 16, Kt = 24.

This means that any Walsh Hadamard code is re-ordered as a two-dimensional pattern of a basic element for the pilot signal. This basic element is superimposed.

The basic element provides processing gain to achieve precise channel estimation. Furthermore, the interleaving mapping information is engaged in the example with the index of the selected Walsh Hadamard code in a one-to-one mapping manner. Thus, the 384x384 Walsh-Hadamard matrix provides 384 different interleaving orders.

Note that only the data signal will be interleaved. Especially, the basic elements of the pilot signals are not interleaved. Thus, once the receiver detects for example the first basic element W1 of the superimposed pilot, it can recognize which Walsh-Hadamard code w1, ..., w384 is used. The Walsh-Hadamard code index indicates also which interleaving mechanism has been used by the sender. After determination of the interleaving mechanism, the receiver can start with decoding the data signal.

A table may be used to store corresponding information. An example for such table is used to map a particular Walsh-Hadamard code wn that was mapped to a particular basic element Wn, to physical signal control information in addition to the interleaver pattern:

| Index of Walsh Hadamard Code | Channel Code Rate | Modulation | Scrambling ID | Interleaver Pattern |
|---|---|---|---|---|
| 1 | ¼ | BPSK | 1 | 1 |
| 2 | ¼ | BPSK | 2 | 2 |
| 3 | ¼ | BPSK | 3 | 3 |
| ... ... | ... ... | ... ... | ... ... | ... ... |
| 382 | 8/9 | 64QAM | 382 | 382 |
| 383 | 8/9 | 64QAM | 383 | 383 |
| 384 | 8/9 | 64QAM | 384 | 384 |

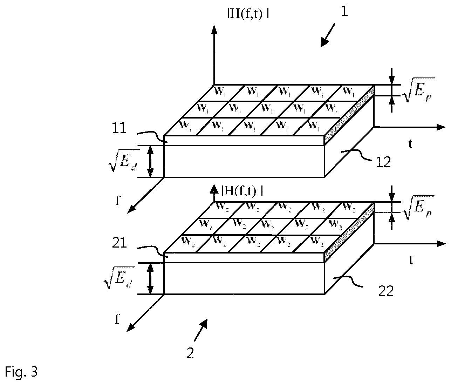

Fig. 3 schematically depicts parts of time-frequency allocation of a radio resource for two user of the radio resource.

In Fig. 3, a time-frequency allocation |H (f, t)| for the first signal 1 and the second signal 2 corresponding to two users in a multiuser scenario is considered. The time-frequency allocations |H(f,t)| of the first signal 1 and the second signal 2 in Fig. 3 have the same shape for illustration purpose. As depicted in Fig. 1 however, the respective time-frequency allocations |H (f, t)| are not overlapping each other and may have different shapes.

The average power per pilot symbol in the first superimposed signal 1 and the second superimposed signal 2 is less than the average power per data symbol. In the example the average power per data symbol of the first data signal 12 and the second data signal 22 is referenced as VEd. In the example the average power per data symbol of the first pilot signal 11 and the second pilot signal 21 is referenced as VEp.

Notably any two Basic Elements from 384 Walsh-Hadamard codes are orthogonal to each other. In the example for two users, the sender selects two different rows of the Walsh-Hadamard code as parameters for the two interleavers. For example, turbo coder internal interleaver parameters are set based on the selected Walsh-Hadamard code. This delivers the minimal correlation between both signal streams for the two users.

In the example of Fig. 3, the first superimposed signal 1 contains a plurality of the same non-overlapping first basic element W1. In the example of Fig. 3, the second superimposed signal 2 contains a plurality of the same non-overlapping second basic element W2. The second basic element W2 is constructed in the same way as the first basic element W1, with a different row of the Walsh-Hadamard matrix H. Preferably a plurality of neighbouring first basic elements W1 or second basic elements W2 are used.

In the case of 384 Walsh-Hadamard codes, the processing gain is 10*log10 (384) in [dB]. Due to this high processing gain, the receiver is capable of detecting, from the superimposed signal, the basic element and the interleaver. Additionally, a randomization of the first data signal and the second data signal may be used to achieve instantaneously low correlation between the data signals. This further improves the performance of detection and decoding.

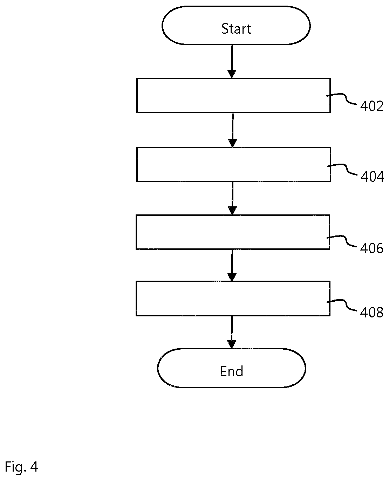

Figure 4 schematically depicts part of a method of sending data, preferably in pilot aided interleaving-based multiple access. The method starts for example whenever data to be sent is available.

In the method of sending data, after the start, a step of constructing 402 a data signal is executed. The data signal is constructed from data interleaved according to interleaving mapping information. Interleaving mapping information in the example provides instructions for reordering the elements of code words to be sent. Preferably a plurality of different interleaving mapping information is available. In this case for, sending the data signal, one interleaving mapping information is selected. In a single user case, one Walsh-Hadamard code and one interleaving mapping order is selected as described above. In a multi user case, multiple Walsh-Hadamard codes are selected whose interleaving mapping order minimize the correlation with respect to the current data signals. Correspondingly the plurality of interleaving mapping orders are selected as described above.

Interleaved data is in the example created by encoding code words, e.g. using a turbo encoder. The interleaved data is in the example modulated, e.g. using quadrature amplitude modulation, e.g. M-QAM.

Afterwards, a step of constructing 404 a basic element of a pilot signal is executed. The basic element is constructed depending on a row of an orthogonal codebook matrix of an orthogonal basis consisting of code words that are mathematically orthogonal, e.g. a Walsh-Hadamard matrix.

The row of the orthogonal codebook matrix in the example corresponds to the interleaving mapping information that has been used to construct the data signal. Preferably the index of the row in the orthogonal codebook matrix indicates one interleaving mapping information of the plurality of different interleaving mapping information. The basic element of the pilot signal is in the example modulated with respect to binary phase shift keying.

The basic element is constructed to have a first time-frequency allocation. The data signal is constructed to have a second time-frequency allocation. The first time-frequency allocation is within the second time-frequency allocation.

Optionally the basic element may be duplicated at least once to form a duplicated basic element. Additionally, or alternatively, a duplicated basic element may be constructed. The duplicated basic element has a third time-frequency allocation within the second time-frequency allocation. Preferably the third time-frequency allocation is not overlapping the first time-frequency allocation. Preferably the basic element is duplicated to form a plurality of duplicated basic elements or to construct a plurality of duplicated basic elements. The plurality of duplicated basic elements is preferably constructed to have a plurality of different non-overlapping time-frequency allocations within the second time-frequency allocation.

Afterwards a step of superimposing 406 the basic element and the data signal to form a superimposed signal is executed. Preferably the average power per data symbol is more than the average power per pilot symbol.

Optionally, the at least one duplicated basic element and the data signal are superimposed as well. Optionally the data signal is superimposed with the plurality of duplicated basic elements as well.

Afterwards, a step of sending 408 the superimposed signal is executed. Then the method ends.

Additionally, the method may comprise optional steps of constructing at least two identical basic elements of the pilot signal, and superimposing at least two data signals each with one of the at least two identical basic elements.

In this case optionally at least two radio cells of a plurality of radio cells in a pilot aided interleaving-based multiple access telecommunication network are selected for superimposing the at least two data signals depending on their distance to each other.

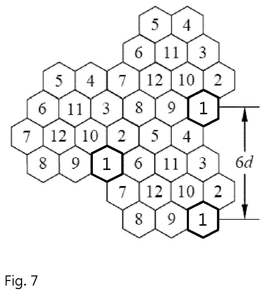

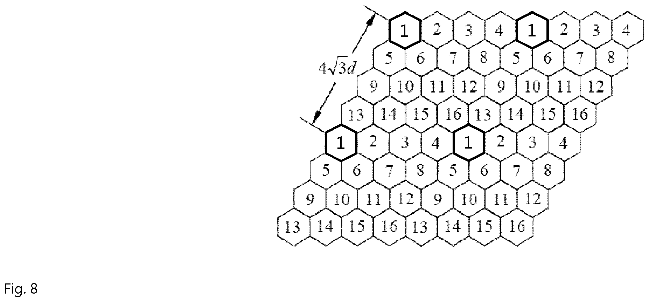

Examples of pilot aided interleaving-based multiple access telecommunication networks are depicted schematically in Fig. 7 and Fig. 8. In the examples, twelve different basic elements 1, ..., 12 are used in a plurality of correspondingly labelled radio cells. The radio cells have a hexagonal shape and cover a certain area spatially. Radio cells using the same basic element in their respective pilot signal are numbered in Fig. 7 and Fig. 8 with identical reference numeral. The size of a radio cell is in the example a distance d. The size may be the size of at least one pilot aided interleaving-based multiple access radio cell. The distance d depends for example on the distance from the access point. The distance between radio cells using the same basic element is in Fig. 7 six fold the distance d, i.e. 6d. The distance between radio cells using the same basic element is in Fig. 8 four times the square root of the three fold of the distance d, i.e. $4\sqrt{3}d$. This is depicted for the radio cells using basic element 1.

The selected radio cells are located at distance from each other, and preferably the distance between pairs of selected radio cells exceeds a threshold. The threshold in the example is less than 6d or $4\sqrt{3}d$. Optionally, the access

points of radio cells that use the same basic element may be selected to have the distance of the threshold. The threshold may also depend on information about a multiple of another length characteristic for the size of the one or more radio cells.

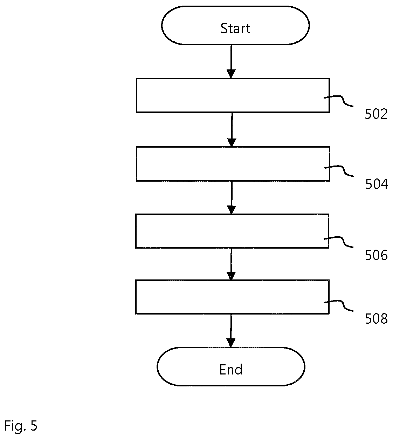

Figure 5 schematically depicts part of a method of receiving data. The method starts for example whenever data is received.

Preferably the method of receiving data is executed in pilot aided interleaving-based multiple access.

After the start, the method comprises a step of receiving 502 a superimposed signal. The received superimposed signal formed by superimposing the basic element of the pilot signal and the data signal. The data signal being constructed from data interleaved according to interleaving mapping information. The basic element of the pilot signal being constructed depending on the row of the orthogonal codebook matrix of the orthogonal basis consisting of code words that are mathematically orthogonal, e.g. the Walsh-Hadamard matrix. The row of the orthogonal codebook matrix corresponds to the interleaving mapping information.

Afterwards, a step of decomposing 504 the superimposed signal is executed to form a received basic element and a received data signal. Ideally the superimposed signal is received without error. In this case the received basic element and the received data signal correspond to the basic element of the pilot signal and the data signal that were sent. However, errors may occur. In that case, the received basic element and/or the received data signal may contain an error as well. In the example, the average power per data symbol is more than the average power per pilot symbol. The difference may be used to filter the superimposed signal during decomposition. In the example, the basic element of the pilot signal is modulated only, e.g. using binary phase shift keying. For example, successively rows of the Walsh-Hadamard matrix are looked-up to establish which basic element has been received. Then a decorrelation between the released basic element and the received superimposed signal may be used to establish the received data signal. Both in single user and multi-user scenarios the Walsh-Hadamard matrix provides the key to perform the channel estimation.

Optionally, the at least one received duplicated basic element and the data signal are decomposed as well. Optionally the data signal and the plurality of duplicated basic elements are decomposed as well.

Afterwards, a step of detecting 506 the interleaving mapping information from the basic element is executed. Ideally the basic element is received without error. In this case the sent basic element and the received basic element correspond to the same row of the orthogonal codebook matrix. Provided that the same orthogonal codebook matrix, that has been used to create the basic element, is known, the row is identified in the orthogonal codebook matrix e.g. by a look up in the orthogonal codebook matrix. In the example, the index of each row of the orthogonal codebook matrix maps to the interleaving mapping information used to form the sent data signal. Provided, that the interleaving mapping information is known for all rows of the orthogonal codebook matrix, the identical row, in the example the index of the row in the orthogonal codebook matrix, maps to the same interleaving mapping information. In case an error occurred in the basic element, the most likely row of the orthogonal codebook matrix may be used as well. In multi-user scenarios the Walsh-Hadamard matrix provides the number of potentially active users and the interleaving mapping orders for corresponding received data signals. Additionally, techniques for feed forward error correction or error correction coding may be used as well.

Afterwards, a step of decoding 508 the received data signal depending on the interleaving mapping information is executed. Preferably the received data signal is demodulated. In the example the quadrature amplitude modulated signal is demodulated to form received interleaved data. Then the received interleaved data is interleaved, e.g. re-ordered, according to the interleaving mapping information to form code words. Afterwards the code words are decoded, e.g. by a turbo decoder. Then the method ends.

The identified basic element W1, ..., W384 is a pilot pattern that, in the example, is derived from one of the Walsh Hadamard codes w1, ..., w384 of the orthogonal codebook matrix H. Any other pilot pattern, based on an orthogonal set, may be used as well.

The interleaving mapping order can be static, e.g. a look up table, or a randomized generator, depending on the identified Walsh Hadamard code as an input parameter. For sporadic traffic or small data packet communications, the benefit is, that control signals are avoided, if the pilot related construction rule is well-known by the sender and the receiver.

Preferably an interleaving mapping rule in the interleaving mapping information is adaptive depending on currently transmitted data streams. Adaptive in this case means that the interleaving mapping rules which are selected provide minimal cross-correlation between the signal streams.

This improves in particular small packet communications.

At the receiver side, no dedicated control flow is required to recover the interleaving mapping rule from the interleaving mapping information. The superimposed basic elements of the pilot signal help to estimate the channel precisely and provide the information to decode the interleaving mapping rule.

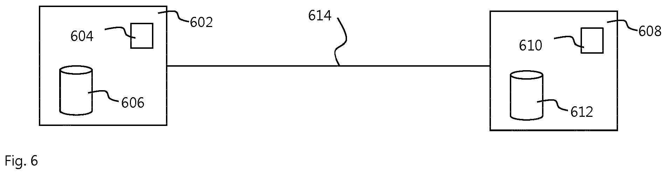

Figure 6 schematically depicts part of a radio access network.

A sender 602 comprises a processor 604 and storage 606 comprising instructions executable by the processor 604. The sender 602 may be an access node of the radio access network, for example a base station. Embodiments of the invention then relate to downlink transmissions. Alternatively, the sender 602 may be a mobile device, such as a user equipment. Embodiments of the invention then relate to uplink transmissions.

The processor 604 is adapted to execute the instructions to construct the data signal from data interleaved according to interleaving mapping information.

The processor 604 is adapted to execute the instructions to construct the basic element of the pilot signal depending on the row of the orthogonal codebook matrix of the orthogonal basis consisting of code words that are mathematically orthogonal, e.g. the Walsh-Hadamard matrix. The row of the orthogonal codebook matrix corresponds to the interleaving mapping information.

The processor 604 is adapted to execute the instructions to superimpose the basic element and the data signal to form a superimposed signal.

The sender 602 is adapted to send the superimposed signal in pilot aided interleaving-based multiple access, e.g. pilot aided Interleaving-Division Multiple Access.

A receiver 608 comprises another processor 610 and another storage 612 comprising further instructions executable by the other processor 610. The receiver 608 may be a mobile device, for example a user equipment. Embodiments of the invention then relate to downlink transmissions. Alternatively, the receiver 608 may take the form of a radio access node, such as a base station. Embodiments of the invention then relate to uplink transmissions.

The receiver 608 is adapted to receive the superimposed signal, formed by superimposing the basic element of the pilot signal and the data signal. The data signal received has been constructed from data interleaved according to interleaving mapping information, and the basic element of the pilot signal being constructed depending on the row of the orthogonal codebook matrix of the orthogonal basis consisting of code words that are mathematically orthogonal, e.g. the Walsh-Hadamard matrix. The row of the orthogonal codebook matrix corresponds to the interleaving mapping information.

The other processor 610 is adapted to execute the further instructions to decompose the superimposed signal to form the received basic element and the received data signal.

The other processor 610 is adapted to execute the further instructions to detect the received interleaving mapping information from the received basic element.

The other processor 610 is adapted to execute the further instructions to decode the received data signal depending on the detected interleaving mapping information.

The instructions used by the sender 602 and the further instructions used by the receiver 608 are for example an implementation of the method of sending and the method of receiving described above respectively.

The sender 602 is connectable with the receiver 608 via a data link 614. Preferably as data link 614 a pilot aided interleaving-based multiple access connection, e.g. a pilot aided Interleaving-Division Multiple Access connection, is used.

Some embodiments of the invention may be used in a (massive) MIMO system using multiple carriers to transfer data between network nodes, e.g. from a network access node (for example a base station) to a mobile device (for example a user equipment) over an air interface in downlink transmissions and vice versa in uplink transmissions.

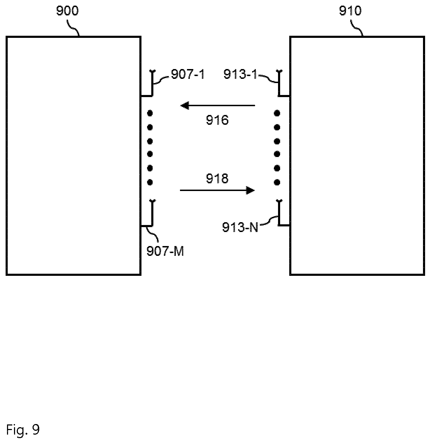

Fig. 9 schematically depicts an example of a first transceiver 900 and a second transceiver 910 in a MIMO system. Both the first transceiver 900 and the second transceiver 910 comprise a transmitter and a receiver for transmitting and receiving data over the air interface respectively.

The first transceiver 900 comprises M antennas 907-1, ..., 907-M. The second transceiver 910 comprises N antennas 913-1, ..., 913-N. If the first transceiver is part of a radio access node and the second transceiver 910 is part of a mobile device, this results in an $M \times N$ uplink channel 916 between first transceiver 900 and second transceiver 910 and an $N \times M$ downlink channel 918 between both transceivers 900, 910.

Alternatively, the first transceiver 900 may be part of the radio access node and the second transceiver 910 may be part of the mobile device. In such configuration, there is an $M \times N$ downlink channel 916 between first transceiver 900 and second transceiver 910 and an $N \times M$ uplink channel 918 between both transceivers 900, 910.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

The functions of the various elements shown in the figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow chart represents various processes which may be substantially represented in a computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

1. A method of sending data in pilot aided interleaving-based multiple access, comprising

   Constructing (402) a data signal from data interleaved according to an interleaving mechanism,
   Constructing (404) a basic element of a pilot signal **based** on a row of an orthogonal codebook matrix of an orthogonal basis consisting of code words that are mathematically orthogonal, wherein **each** row of the orthogonal codebook matrix corresponds to an interleaving mechanism , and wherein the one-to-one mapping between the rows of the orthogonal codebook matrix and the interleaving mechanism is stored in a table,
   Superimposing (406) the basic element and the data signal to form a superimposed signal, and
   Sending (408) the superimposed signal.

2. The method of claim 1, wherein the basic element is constructed to have a first time-frequency allocation, wherein the data signal is constructed to have a second time-frequency allocation, wherein the first time-frequency allocation is within the second time-frequency allocation, the method comprising

   Duplicating the basic element at least once to form a duplicated basic element or constructing a duplicated basic element, the duplicated basic element having a third time-frequency allocation within the second time-frequency allocation, wherein the third time-frequency allocation is not overlapping the first time-frequency allocation, and
   Superimposing the at least one duplicated basic element and the data signal.

3. The method of claim 2, comprising
   Duplicating the basic element to a plurality of duplicated basic elements or constructing a plurality of duplicated basic elements, the plurality of duplicated basic elements having a plurality of neighbouring non-overlapping time-frequency allocations within the second time-frequency allocation, and superimposing the data signal with the plurality of duplicated basic elements.

4. The method of any of claims 1 to 3, comprising

   Constructing at least two identical basic elements of the pilot signal,
   Superimposing at least two data signals each with one of the at least two identical basic elements, wherein at least two radio cells of a plurality of radio cells in a pilot aided interleaving-based multiple access telecommunication network are selected for superimposing the at least two data signals depending on their distance to each other.

5. The method of any of claims 1 to 4, comprising
   Selecting pilot aided interleaving-based multiple access radio cells for superimposing data signals with identical basic elements that are located at distance from each other, wherein the distance exceeds a threshold.

6. The method of claim 5, wherein the threshold depends on information about a size of at least one pilot aided interleaving-based multiple access radio cell.

7. The method of claim 6, wherein the threshold depends on information about a multiple of a length characteristic for the size of the one or more radio cells.

8. The method of any of claims 1 to 7 wherein the data signal is encoded, interleaved and modulated, and wherein a basic element of the pilot signal is modulated only.

9. The method of any of claims 1 to 8, wherein the average power per pilot symbol is less than the average power per data symbol.

10. A method of receiving data in pilot aided interleaving-based multiple access, comprising

Receiving (502) a superimposed signal, formed by superimposing a basic element of a pilot signal and a data signal, the data signal being constructed from data interleaved according to an interleaving mechanism, and the basic element of the pilot signal being constructed based on a row of an orthogonal codebook matrix of an orthogonal basis consisting of code words that are mathematically orthogonal, wherein each row of the orthogonal codebook matrix corresponds to an interleaving mechanism, and wherein the one-to-one mapping between the rows of the orthogonal codebook matrix and the interleaving mechanism is stored in a table,
Decomposing (504) the superimposed signal to form the basic element and the data signal,
Detecting (506) the interleaving mechanism from the basic element; and
Decoding (508) the data signal **based** on the **detected** interleaving mechanism.

11. A sender (602) comprising a processor (604) and storage (606) comprising instructions executable by the processor (604), wherein the processor (604) is adapted to execute the instructions to

Construct a data signal from data interleaved according to an interleaving **mechanism**
Construct a basic element of a pilot signal **based** on a row of an orthogonal codebook matrix of an orthogonal basis consisting of code words that are mathematically orthogonal, wherein each row of the orthogonal codebook matrix corresponds to an interleaving **mechanism,** and wherein the one-to-one mapping between the rows of the orthogonal codebook matrix and the interleaving mechanism is stored in a table,
Superimpose the basic element and the data signal to form a superimposed signal, and
wherein the sender (602) is adapted to send the superimposed signal in a pilot aided interleaving-based multiple access network.

12. A receiver (608) comprising a processor (610) and storage (612) comprising instructions executable by the processor (610),

wherein the receiver (608) is adapted to receive a superimposed signal in a pilot aided interleaving-based multiple access network, wherein the superimposed signal is, formed by superimposing a basic element of a pilot signal and a data signal, the data signal being constructed from data interleaved according to an interleaving mechanism, and the basic element of the pilot signal being constructed based on a row of an orthogonal codebook matrix of an orthogonal basis consisting of code words that are mathematically orthogonal wherein each row of the
orthogonal codebook matrix corresponds to an interleaving mechanism, and wherein the one-to-one mapping between the rows of the orthogonal codebook matrix and the interleaving mechanism is stored in a table,
wherein the processor (610) is adapted to execute the instructions to
Decompose the superimposed signal to form the basic element and the data signal,
Detect the interleaving **mechanism** from the basic element, and
Decode the data signal based on the
detected interleaving **mechanism.**

**Patentansprüche**

1. Verfahren zum Senden von Daten mit einem pilotgestützten verschachtelungsbasierten Mehrfachzugriff, das Folgendes umfasst

Konstruieren (402) eines Datensignals aus Daten, die gemäß einem Verschachtelungsmechanismus verschachtelt sind,
Konstruieren (404) eines Basiselements eines Pilotsignals auf Basis einer Zeile einer orthogonalen Codebuchmatrix einer orthogonalen Basis, die aus Codewörtern besteht, die mathematisch orthogonal sind, wobei jede Zeile der orthogonalen Codebuchmatrix einem Verschachtelungsmechanismus entspricht, und wobei die Eins-zu-eins-Zuordnung zwischen den Zeilen der orthogonalen Codebuchmatrix und dem Verschachtelungsmechanismus in einer Tabelle gespeichert ist,
Überlagern (406) des Basiselements und des Datensignals, um ein überlagertes Signal zu bilden, und
Senden (408) des überlagerten Signals.

2. Verfahren nach Anspruch 1, wobei das Basiselement derart konstruiert ist, dass es eine erste Zeitfrequenzzuteilung aufweist, wobei das Datensignal derart konstruiert ist, dass es eine zweite Zeitfrequenzzuteilung aufweist, wobei die erste Zeitfrequenzzuteilung innerhalb der zweiten Zeitfrequenzzuteilung liegt, wobei das Verfahren Folgendes umfasst

   mindestens einmaliges Duplizieren des Basiselements, um ein dupliziertes Basiselement zu bilden, oder Konstruieren eines duplizierten Basiselements, wobei das duplizierte Basiselement eine dritte Zeitfrequenzzuteilung innerhalb der zweiten Zeitfrequenzzuteilung aufweist, wobei die dritte Zeitfrequenzzuteilung die erste Zeitfrequenzzuteilung nicht überlappt, und
   Überlagern des mindestens einen duplizierten Basiselements und des Datensignals.

3. Verfahren nach Anspruch 2, das Folgendes umfasst Duplizieren des Basiselements zu einer Vielzahl von duplizierten Basiselementen oder Konstruieren einer Vielzahl von duplizierten Basiselementen, wobei die Vielzahl von duplizierten Basiselementen eine Vielzahl von benachbarten nicht überlappenden Zeitfrequenzzuteilungen innerhalb der zweiten Zeitfrequenzzuteilung aufweist, und Überlagern des Datensignals mit der Vielzahl von duplizierten Basiselementen.

4. Verfahren nach einem der Ansprüche 1 bis 3, das Folgendes umfasst

   Konstruieren von mindestens zwei identischen Basiselementen des Pilotsignals,
   Überlagern von mindestens zwei Datensignalen, jedes mit einem der mindestens zwei identischen Basiselementen, wobei mindestens zwei Funkzellen einer Vielzahl von Funkzellen in einem Telekommunikationsnetzwerk mit pilotgestütztem verschachtelungsbasiertem Mehrfachzugriff zum Überlagern der mindestens zwei Datensignale in Abhängigkeit von ihrem Abstand voneinander ausgewählt werden.

5. Verfahren nach einem der Ansprüche 1 bis 4, das Folgendes umfasst
   Auswählen von Funkzellen mit pilotgestütztem verschachtelungsbasiertem Mehrfachzugriff zum Überlagern von Datensignalen mit identischen Basiselementen, die sich in einem Abstand voneinander befinden, wobei der Abstand einen Schwellwert überschreitet.

6. Verfahren nach Anspruch 5, wobei der Schwellwert von Informationen über eine Größe von mindestens einer Funkzelle mit pilotgestütztem verschachtelungsbasiertem Mehrfachzugriff abhängig ist.

7. Verfahren nach Anspruch 6, wobei der Schwellwert von Informationen über ein Vielfaches einer Längeneigenschaft für die Größe der einen oder der mehreren Funkzellen abhängig ist.

8. Verfahren nach einem der Ansprüche 1 bis 7, wobei das Datensignal codiert, verschachtelt und moduliert ist, und wobei ein Basiselement des Pilotsignals nur moduliert ist.

9. Verfahren nach einem der Ansprüche 1 bis 8, wobei die durchschnittliche Leistung pro Pilotsymbol kleiner ist als die durchschnittliche Leistung pro Datensymbol.

10. Verfahren zum Empfangen von Daten mit einem pilotgestützten verschachtelungsbasierten Mehrfachzugriff, das Folgendes umfasst

    Empfangen (502) eines überlagerten Signals, das durch Überlagern eines Basiselements eines Pilotsignals und eines Datensignals gebildet wird, wobei das Datensignal aus Daten konstruiert wird, die gemäß einem Verschachtelungsmechanismus verschachtelt werden, und wobei das Basiselement des Pilotsignals auf Basis einer Zeile einer orthogonalen Codebuchmatrix einer orthogonalen Basis konstruiert wird, die aus Codewörtern besteht, die mathematisch orthogonal sind, wobei jede Zeile der orthogonalen Codebuchmatrix einem Verschachtelungsmechanismus entspricht, und wobei die Eins-zu-eins-Zuordnung zwischen den Zeilen der orthogonalen Codebuchmatrix und dem Verschachtelungsmechanismus in einer Tabelle gespeichert ist,
Zerlegen (504) des überlagerten Signals, um das Basiselement und das Datensignal zu bilden,
Detektieren (506) des Verschachtelungsmechanismus im Basiselement; und
Decodieren (508) des Datensignals auf Basis des detektierten Verschachtelungsmechanismus.

**11.** Sender (602), der einen Prozessor (604) und einen Speicher (606) umfasst, der Anweisungen umfasst, die vom Prozessor (604) ausführbar sind, wobei der Prozessor (604) angepasst ist, die Anweisungen zu Folgendem auszuführen

Konstruieren eines Datensignals aus Daten, die gemäß einem Verschachtelungsmechanismus verschachtelt sind
Konstruieren eines Basiselements eines Pilotsignals auf Basis einer Zeile einer orthogonalen Codebuchmatrix einer orthogonalen Basis, die aus Codewörtern besteht, die mathematisch orthogonal sind, wobei jede Zeile der orthogonalen Codebuchmatrix einem Verschachtelungsmechanismus entspricht, und wobei die Eins-zu-eins-Zuordnung zwischen den Zeilen der orthogonalen Codebuchmatrix und dem Verschachtelungsmechanismus in einer Tabelle gespeichert ist,
Überlagern des Basiselements und des Datensignals, um ein überlagertes Signal zu bilden, und
wobei der Sender (602) angepasst ist, das überlagerte Signal in einem Netzwerk mit pilotgestütztem verschachtelungsbasiertem Mehrfachzugriff zu senden.

**12.** Empfänger (608), der einen Prozessor (610) und einen Speicher (612) umfasst, der Anweisungen umfasst, die vom Prozessor (610) ausführbar sind,

wobei der Empfänger (608) angepasst ist, ein überlagertes Signal in einem Netzwerk mit pilotgestütztem verschachtelungsbasiertem Mehrfachzugriff zu empfangen, wobei das überlagerte Signals durch Überlagern eines Basiselements eines Pilotsignals und eines Datensignals gebildet wird, wobei das Datensignal aus Daten konstruiert wird, die gemäß einem Verschachtelungsmechanismus verschachtelt werden, und wobei das Basiselement des Pilotsignals auf Basis einer Zeile einer orthogonalen Codebuchmatrix einer orthogonalen Basis konstruiert wird, die aus Codewörtern besteht, die mathematisch orthogonal sind, wobei jede Zeile der orthogonalen Codebuchmatrix einem Verschachtelungsmechanismus entspricht, und wobei die Eins-zu-eins-Zuordnung zwischen den Zeilen der orthogonalen Codebuchmatrix und dem Verschachtelungsmechanismus in einer Tabelle gespeichert ist,
wobei der Prozessor (610) angepasst ist, die Anweisungen für Folgendes auszuführen
Zerlegen des überlagerten Signals, um das Basiselement und das Datensignal zu bilden,
Detektieren des Verschachtelungsmechanismus im Basiselement, und
Decodieren des Datensignals auf Basis des detektierten Verschachtelungsmechanismus.

## Revendications

**1.** Procédé d'envoi de données dans un accès multiple basé sur l'entrelacement assisté par pilote, comprenant

la construction (402) d'un signal de données à partir de données entrelacées selon un mécanisme d'entrelacement,
la construction (404) d'un élément de base d'un signal pilote sur la base d'une rangée d'une matrice de livre de codes orthogonale d'une base orthogonale constituée de mots de code qui sont mathématiquement orthogonaux, dans lequel chaque rangée de la matrice de livre de codes orthogonale correspond à un mécanisme d'entrelacement, et dans lequel le mappage biunivoque entre les rangées de la matrice de livre de codes orthogonale et le mécanisme d'entrelacement est stocké dans une table,
la superposition (406) de l'élément de base et du signal de données pour former un signal superposé, et
l'envoi (408) du signal superposé.

**2.** Procédé selon la revendication 1, dans lequel l'élément de base est construit pour avoir une première allocation de fréquence temporelle, dans lequel le signal de données est construit pour avoir une deuxième allocation de fréquence temporelle, dans lequel la première allocation de fréquence temporelle se trouve dans la deuxième allocation de fréquence temporelle, le procédé comprenant

la duplication de l'élément de base au moins une fois pour former un élément de base dupliqué ou la construction d'un élément de base dupliqué, l'élément de base dupliqué ayant une troisième allocation de fréquence temporelle dans la deuxième allocation de fréquence temporelle, dans lequel la troisième allocation de fréquence temporelle ne chevauche pas la première allocation de fréquence temporelle, et
la superposition du au moins un élément de base dupliqué et du signal de données.

3. Procédé selon la revendication 2, comprenant
la duplication de l'élément de base en une pluralité d'éléments de base dupliqués ou la construction d'une pluralité d'éléments de base dupliqués, la pluralité d'éléments de base dupliqués ayant une pluralité d'allocations de fréquence temporelle voisines ne se chevauchant pas dans la deuxième allocation de fréquence temporelle, et la superposition du signal de données avec la pluralité d'éléments de base dupliqués.

4. Procédé selon l'une des revendications 1 à 3, comprenant

la construction d'au moins deux éléments de base identiques du signal pilote,
la superposition d'au moins deux signaux de données, chacun avec l'un des au moins deux éléments de base identiques, dans lequel au moins deux cellules radio d'une pluralité de cellules radio dans un réseau de télécommunication à accès multiple basé sur l'entrelacement assisté par pilote sont sélectionnées pour superposer les au moins deux signaux de données en fonction de leur distance l'un par rapport à l'autre.

5. Procédé selon l'une des revendications 1 à 4, comprenant
la sélection de cellules radio d'accès multiple basé sur l'entrelacement assisté par pilote pour superposer des signaux de données avec des éléments de base identiques qui sont situés à une certaine distance les uns des autres, dans lequel la distance dépasse un seuil.

6. Procédé selon la revendication 5, dans lequel le seuil dépend d'informations sur la taille d'au moins une radio d'accès multiple basé sur l'entrelacement assisté par pilote.

7. Procédé selon la revendication 6, dans lequel le seuil dépend d'informations sur un multiple d'une longueur caractéristique de la taille d'une ou plusieurs cellules radio.

8. Procédé selon l'une des revendications 1 à 7 dans lequel le signal de données est codé, entrelacé et modulé, et dans lequel un élément de base du signal pilote est uniquement modulé.

9. Procédé selon l'une des revendications 1 à 8, dans lequel la puissance moyenne par symbole pilote est inférieure à la puissance moyenne par symbole de données.

10. Procédé de réception de données dans un accès multiple basé sur l'entrelacement assisté par pilote, comprenant

la réception (502) d'un signal superposé, formé en superposant un élément de base d'un signal pilote et un signal de données, le signal de données étant construit à partir de données entrelacées selon un mécanisme d'entrelacement, et l'élément de base du signal pilote étant construit sur la base d'une rangée d'une matrice de livre de codes orthogonale d'une base orthogonale constituée de mots de code qui sont mathématiquement orthogonaux, dans lequel chaque rangée de la matrice de livre de codes orthogonale correspond à un mécanisme d'entrelacement, et
dans lequel le mappage biunivoque entre les rangées de la matrice de livre de codes orthogonale et le mécanisme d'entrelacement est stocké dans une table,
la décomposition (504) du signal superposé pour former l'élément de base et le signal de données,
la détection (506) du mécanisme d'entrelacement à partir de l'élément de base ; et
le décodage (508) du signal de données sur la base du mécanisme d'entrelacement détecté.

11. Émetteur (602) comprenant un processeur (604) et un stockage (606) comprenant des instructions exécutables par le processeur (604), dans lequel le processeur (604) est adapté pour exécuter les instructions pour

construire un signal de données à partir de données entrelacées selon un mécanisme d'entrelacement
construire un élément de base d'un signal pilote sur la base d'une rangée d'une matrice de livre de codes orthogonale d'une base orthogonale constituée de mots de code qui sont mathématiquement orthogonaux, dans lequel chaque rangée de la matrice de livre de codes orthogonale correspond à un mécanisme d'entrelacement, et dans lequel le mappage biunivoque entre les rangées de la matrice de livre de codes orthogonale et le mécanisme d'entrelacement est stocké dans une table,
superposer l'élément de base et le signal de données pour former un signal superposé, et
dans lequel l'émetteur (602) est adapté pour envoyer le signal superposé dans un réseau d'accès multiple basé sur l'entrelacement assisté par pilote.

12. Récepteur (608) comprenant un processeur (610) et un stockage (612) comprenant des instructions exécutables par le processeur (610),

dans lequel le récepteur (608) est adapté pour recevoir un signal superposé dans un réseau d'accès multiple basé sur l'entrelacement assisté par pilote, dans lequel le signal superposé est formé en superposant un élément de base d'un signal pilote et un signal de données, le signal de données étant construit à partir de données entrelacées selon un mécanisme d'entrelacement, et l'élément de base du signal pilote étant construit sur la base d'une rangée d'une matrice de livre de codes orthogonale d'une base orthogonale constituée de mots de code qui sont mathématiquement orthogonaux dans lequel chaque rangée de la matrice de livre de codes orthogonale correspond à un mécanisme d'entrelacement, et dans lequel le mappage biunivoque entre les rangées de la matrice de livre de codes orthogonale et le mécanisme d'entrelacement est stocké dans une table,
dans lequel le processeur (610) est adapté pour exécuter des instructions pour
décomposer le signal superposé pour former l'élément de base et le signal de données,
détecter le mécanisme d'entrelacement à partir de l'élément de base, et
décoder le signal de données sur la base du mécanisme d'entrelacement détecté.

Fig. 1

Fig. 2

Fig. 3

Fig. 4

Fig. 5

604 — 602

610 — 608

614

606

612

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2930872 A1

**Non-patent literature cited in the description**

- Trellis-based channel estimation for asynchronous IDMA with superimposed pilots. **CHEN YEJIAN et al.** 2014 IEEE/CIC International conference on communications in china. IEEE, 13 October 2014, 539-543
- Two-dimensional Pilot Design for Non-Orthogonal Multiple Access in Multicarrier System. **CHEN YEJIAN.** 2016 IEEE GLOBECOM WORKSHOPS. IEEE, 04 December 2016, 1-6
- Graph Coloring Based Pilot Allocation to Mitigate Pilot Contamination for Multi-Cell Massive MIMO Systems. **ZHU XUDONG et al.** IEEE Communications letters. IEEE service center, 01 October 2015, vol. 19, 1842-1845